Europäisches Patentamt

European Patent Office

Office européen des brevets

(11) Veröffentlichungsnummer: **0 236 932**

**A2**

(12) # EUROPÄISCHE PATENTANMELDUNG

(21) Anmeldenummer: **87103082.1**

(51) Int. Cl.⁴: **H04L 11/20**

(22) Anmeldetag: **04.03.87**

(30) Priorität: **14.03.86 DE 3608673**

(43) Veröffentlichungstag der Anmeldung:
**16.09.87 Patentblatt 87/38**

(84) Benannte Vertragsstaaten:
**AT BE CH DE ES FR GB GR IT LI LU NL SE**

(71) Anmelder: **ESG Elektronik-System-Gesellschaft mbH**
**Vogelweideplatz 9**
**D-8000 München 80(DE)**

(72) Erfinder: **Herzmann, Franz**
**Fasanengartenstrasse 142a**
**D-8000 München 90(DE)**

(74) Vertreter: **Prechtel, Jörg et al**
**Patentanwälte H. Weickmann, Dr. K. Fincke**
**F.A. Weickmann, B. Huber Dr. H. Liska, Dr. J.**
**Prechtel Möhlstrasse 22 Postfach 860 820**
**D-8000 München 86(DE)**

(54) **Verfahren zum Betrieb von Informationsverteilungsnetzen, insbesondere von dezentralen Überwachungssystemen.**

(57) Ein Verfahren zum Betrieb von Informationsverteilungsnetzen, insbesondere von dezentralen Überwachungssystemen, wie z.B. Radar-Überwachungssystemen mit mehreren Informationseingabe-und -weiterleitungseinrichtungen, welche jeweils an wenigstens einen Teil der anderen Einrichtungen Informationspakete abgeben aus wenigstens einer Einzelinformation, die entweder von der abgebenden Einrichtung erstmals ins Netz eingespeist wirde, oder der abgebenden Einrichtung von anderen Einrichtungen übermittelt worden ist, sieht vor, daß bei der Übermittlung des Informationspakets zu jeder Einzelinformation eine Zusatzinformation übermittelt wird, die angibt, ob die Einzelinformation von der abgebenden Einrichtung erstmals ins Netz eingespeist wird, oder vorher der abgebenden Einrichtung von einer anderen Einrichtung übermittelt worden ist. Hierdurch wird der Aufwand für die Rückflußfilterung wesentlich reduziert.

## Verfahren zum Betrieb von Informationsverteilungsnetzen, insbesondere von dezentralen Überwachungssystemen

Die Erfindung betrifft ein Verfahren gemäß dem Oberbegriff des Anspruchs 1.

Derartige Informationsverteilungsnetze bestehen aus mehreren Informationseingabe-und -weiterleitungseinrichtungen, die einerseits Informationen erstmals in das Netz eingeben und andererseits von anderen Einrichtungen erhaltene Information weiterleiten. Das Netz kann vermascht sein; es kommt jedoch auch ein anderer Netzaufbau infrage, wie z.B. eine baumartige Struktur. Die Einrichtungen können untereinander durch jeweils zwei Einrichtungen miteinander verbindende Informationsleitungen (Kabelverbindung, Richtfunkverbindung oder dergl.) verbunden sein. Die Vorteile der Erfindung zeigen sich jedoch besonders bei ungerichteter Informationsübertragung - (ungerichtete Funkverbindungen oder dergl.). Die einzuspeisende und weiterzuleitende Information kann vielfältigen Inhalt haben. Wesentlich ist, daß die Einrichtungen jeweils von den anderen Einrichtungen über die Informationspakete über den momentanen Informa tionszustand des Netzes unterrichtet sind und diese Information, ggf. ergänzt durch selbst ermittelte neue Information, an die Einrichtungen der Nachbarschaft weiterleiten. Ein bevorzugtes Ausführungsbeispiel zur Anwendung der Erfindung sind Radar-Überwachungssysteme, bei welchen jede Einrichgung einen Umgebungsbereich überwacht. Jede Einrichtung führt eine Ziel-Liste mit sämtlichen Zielen, die sowohl von der Einrichtung selbst als auch zumindest von den benachbarten Einrichtungen festgestellt worden sind. Da jede Einrichtung jeweils voll über den jeweiligen Informationszustand des Netzes informiert ist, d.h. in ihrer Ziel-Liste sämtliche von den Einrichtungen aufgespürte Ziele führt, kann sie eigene Überwachungslücken selbsttätig und wirkungsvoll ausfüllen.

Bei dem Betrieb von Informationsverteilungsnetzen der eingangs genannten Art tritt jedoch das Problem auf, daß eine "Rückfluß-Filterung" vorzunehmen ist, um zu verhindern, daß die jeweils zu übermitteinden Informationspakete unnötigerweise ein und dieselbe Einzelinformation mehrfach aufweisen. Ohne Rückflußfilterung fügt die ein Informationspaket erhaltende Einrichtung die von ihr selbst ermittelte Einzelinformation dem Informationspaket stets bei und leitet dieses so erweiterte Informationspaket weiter. Erhält sie nun das Informationspaket im späteren Verlauf, ggf. erweitert durch Einzelinformationen anderer Einrichtungen, wieder zurück, so würde sie ohne die Rückflußfilterung das Informationspaket mit der bereits übermittelten Einzelinformation wiederum weiterleiten.

Bei einem bekannten Verfahren der eingangs genannten Art wird die Rückflußfilterung durch inhaltlichen Vergleich der Einzelinformationen des erhaltenen Informationspakets mit den von der jeweiligen Einrichtung ermittelten Einzelinformationen vorgenommen. Bei Informationspaketen in Form von Ziel-Listen beispielsweise kann ein Koordinatenvergleich (Ortskorrelation) vorgenommen werden und/oder ein Vergleich von Detektions-Zeitpunkten (Zeitkorrelation). Diese Korrelationen verzögern aufgrund entsprechenden Rechner-Zeitaufwandes die jeweilige Unterrichtung der Einrichtungen vom Informationszustand des Netzes. Im Falle von dezentralen Überwachungssystemen verzögert sich die Ziellisten-Aufstellung und verringert damit die Aktualität der Information.

Die Aufgabe der Erfindung liegt darin, bei einem Verfahren der eingangs genannten Art die Rückflußfilterung zu vereinfachen und zu beschleunigen mit der Möglichkeit der Reduzierung des apparativen Aufwands für die Rückflußfilterung.

Diese Aufgabe wird durch die kennzeichnenden Merkmale des Anspruchs 1 in Verbindung mit den Merkmalen des Oberbegriffs gelöst. Die ein Informationspaket empfangende Einrichtung kann aufgrund der Zusatzinformation ohne Korrelationsberechnung zugleich entscheiden, welche Einzelinformationen unmittelbar übernommen werden können, nämlich diejenigen, welche von der abgebenden Einrichtung erstmals ins Netz eingespeist worden sind.

Der Aufwand für die Rückflußfilterung verringert sich weiterhin entscheidend, wenn gemäß den Ansprüchen 2 und 3 vorgegangen wird. Die das Informationspaket empfangende Einrichtung kann dann von denjenigen Einzelinformationen, die die abgebende Einrichtung erstmals weitergegeben hat, solche Einzelinformationen ohne die Gefahr eines Rückflusses inhaltlich ungeprüft übernehmen, die die abgebende Einrichtung von einer dritten Einrichtung empfangen hat, die verschieden ist von der empfangenen Einrichtung. Lediglich für die übrigen Einzelinformationen, also diejenigen Einzelinformationen, die mehrfach weitergegeben worden sind, muß die empfangende Einrichtung eine Rückflußfilterung mit Korrelationsrechnung durchführen, es sei denn, sie läßt diese Einzelinformationen unberücksichtigt.

Bei einer eindeutigen Verknüpfung der Einrichtungen (z.B. über Verbindungskabel oder Richtfunkstrecken) kann die Zusatzinformation, welche angibt, von welcher Einrichtung der abgebenden Einrichtung die Einzelinformation ihrerseits übermittelt worden ist, einfach darin bestehen, daß ein dieser Einrichtung zugeordnetes Code-Wort benutzt wird. Bei mehrkanaligem Informationsempfang, insbesondere ungerichtetem Funkempfang dagegen, wird bevorzugt gemäß Anspruch 4 vorgegangen mit dem Vorteil geringerer Wortlänge für diese Zusatzinformation (bei drei Empfangskanälen 2 Bit) sowie dem Zusatzvorteil, daß der Netzaufbau von Dritten wesentlich schwieriger zu ermitteln ist.

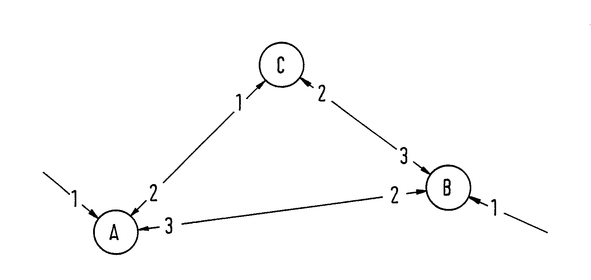

Die Erfindung wird im folgenden an Hand der einzigen Figur an einem bevorzugten Ausführungsbeispiel erläutert.

Die Figur zeigt drei Einrichtungen A, B, C als Teil eines Radar-Überwachungssystems. Diese drei Einrichtungen senden auf jeweils einer von drei unterschiedlichen Frequenzen ungerichtet rundum. Jede Einrichtung hat z.B. drei Empfangskanäle, die auf die Sendefrequenzen von drei benachbarten Einrichtungen abgestimmt sind. Jede Station führt eine nicht gegenseitig abzustimmende Indizierung der Empfangsfrequenzen (Eingangskanäle) durch, nachdem entsprechender Funkkontakt mit den Nachbareinrichtungen hergestellt worden ist. In der Figur sind an den an der jeweiligen Station endenden Pfeilen jeweils die entsprechenden Kanalnummern der Empfangskanäle angeführt. So empfängt die Einrichtung B Informationen von der Einrichtung A über den Eingangskanal 2 und Informationen von der Einrichtung C über den Eingangskanal 3. Die Einrichtung C wiederum empfängt Informationen von der Einrichtung A über den Eingangskanal 1 und Informationen der Einrichtung B über den Eingangskanal 2.

Sobald sich das Netz gebildet hat bzw. nach Änderungen der Anordnung der Einrichtungen des Netzes, werden über sogenannte Statustelegramme zwischen den benachbarten Einrichtungen Informationen über Uhrzeit, Standort ggf. Betriebsart, Empfangskanal ausgetauscht. Aus dieser Information kann jede Einrichtung, z.B. die Einrichtung A, entnehmen, daß die Einrichtung B von der Einrichtung A Informationen über den Eingangskanal 2 der Einrichtung B empfängt und die Einrichtung C Informationen der Einrichtung A über den Eingangskanal 1 der Einrichtung C.

Für die Einrichtung A ergibt sich folglich dann ein Rückfluß an Information, wenn sie über den Kanal 2 (also von der Einrichtung C) Informationen empfängt, die die Einrichtung C über ihren Eingangskanal 1 (d.h. von A) empfangen hat. Dementsprechend liegt auch dann ein Informationsrückfluß vor, wenn A über den Eingangskanal 3 (von B) Informationen empfängt, die von der abgebenden Einrichtung (B) über ihren Kanal 2 - (von A) empfangen worden sind.

Während des Betriebs des Radar-Überwachungssystems nach erfolgtem Austausch der Statustelegramme werden von den Einrichtungen Ziel-Listen geführt, die aus den Koordinaten von von den jeweiligen Einrichtungen entdeckten Zielpunkten bestehen, ggf. ergänzt durch weitere Zeilkennzeichen, wie Zielidentifikation und Detektionszeitpunkt. Diese Ziel-Listen werden ständig an die übrigen Einrichtungen übermittelt, die ihre eigenen Ziel-Listen dementsprechend ergänzen. Die Ziel-Listen werden als Informationspaket jeweils komplett, also samt den Ergänzungen übermittelt. Jeder Zielpunkt wird hierbei mit einer Statusinformation versehen, die beispielsweise die Werte 'Null', 'eins' und 'zwei' im Dezimalsystem annehmen kann. Die Statusinformation 'Null' bedeutet beispielsweise, daß der zugeordnete Zielpunkt ( = Einzelinformation) von der sendenden Einrichtung erstmals in das Netz eingegeben wird, d.h. von dieser Einrichtung selbst entdeckt wurde. Die Statusinformation 'eins' bedeutet die erstmalige Weitergabe des Zeilpunkts. Die Statusinformation 'zwei' bedeutet die zweite und weitere Weitergabe des Zeilpunkts. Die Statusinformation wird zumindest im Falle der Statusinformation 'eins' ergänzt durch eine Empfangskanal-Information, die bei drei Empfangskanälen die dezimalen Werte 'eins', 'zwei' und 'drei' annehmen kann. Diese Kanal-Information gibt also bei erstmaliger Weitergabe des Zielpunkts denjenigen Eingangskanal der sendenden Einrichtung an, über welchen diese Einrichtung die Zielpunkt-Information erhalten hat, wobei diese Zielpunkt-Information die Statusinformation 'Null' aufweist, wenn es sich um die erstmalige Weitergabe handelt.

Diejenigen Einzelinformationen (Zielpunkte) des empfangenen Informationspakets (Ziel-Liste), welche die Statusinformation 'Null' aufweisen, kann die empfangende Einrichtung ohne weiteres übernehmen, da ein Rückfluß von vornherein ausgeschlossen ist.

Bei den Einzelinformationen mit Statusinformation 'eins' (erstmalige Weitergabe) können Rückflüsse vorkommen. Diese lassen sich ohne Korrelationsrechnung sofort ermitteln. Empfängt beispielsweise die Einrichtung A der einzigen Figur über ihren Eingangskanal 'drei' Einzelinformationen mit Statusinformation 'eins' und Eingangskanal-Information 'zwei', so sind diese Einzelinformationen sogleich als Rückflüsse festgestellt und werden nicht in die aktualisierte Ziel-Liste übernommen. Die Einzelinformationen mit Eingangskanal-Information 'drei' dagegen werden in die Ziel-Liste übernommen, da diese von der Einrichtung C stammen.

Der verbleibende Rest an Einzelinformationen - (mit Statusinformation 'zwei') muß, sofern ihre Aufnahme in die Ziel-Liste unter Vermeidung von Rückflüssen gewünscht wird, durch entsprechende Korrelationsberechnung einer herkömmlichen Rückfluß-Filterung unterworfen werden. Es ist jedoch auch denkbar, daß entsprechend den Einzelinformationen mit Statusinformation 'eins' auch bei den Einzelinformationen mit Statusinformation 'zwei' durch zusätzliche Information über die weiteren, in den Vermittlungsweg der Information eingeschalteten Einrichtungen eine sofortige Unterscheidung von rückfließenden Informationen von den übrigen Informationen ohne Korrelationsberechnung möglich wird.

Die Erfindung, wie vorgehend beschrieben, kann wie folgt zusammengefaßt werden:

Ein Verfahren zum Betrieb von Informationsverteilungsnetzen, insbesondere von dezentralen Überwachungssystemen, wie z.B. Radar-Überwachungssystemen mit mehreren Informationseingabe-und -weiterleitungseinrichtungen, welche jeweils an wenigstens einen Teil der anderen Einrichtungen Informationspakete abgeben aus wenigstens einer Einzelinformation, die entweder von der abgebenden Einrichtung erstmals ins Netz eingespeist wirde, oder der abgebenden Einrichtung von anderen Einrichtungen übermittelt worden ist, sieht vor, daß bei der Übermittlung des Informationspakets zu jeder Einzelinformation eine Zusatzinformation übermittelt wird, die angibt, ob die Einzelinformation von der abgebenden Einrichtung erstmals ins Netz eingespeist wird, oder vorher der abgebenden Einrichtung von einer anderen Einrichtung übermittelt worden ist. Hierdurch wird der Aufwand für die Rückflußfilterung wesentlich reduziert.


**Ansprüche**

1. Verfahren zum Betrieb von Informationsverteilungsnetzen, insbesondere von dezentralen Überwachungssystemen, wie z.B. Radar-Überwachungssystemen, mit mehreren Informationseingabe-und -weiterleitungseinrichtungen, welche jeweils an wenigstens einen Teil der anderen Einrichtungen Informationspakete abgeben aus wenigstens einer Einzelinformation, die entweder von der abgebenden Einrichtung erstmals in das Netz eingespeist wird oder vorher der abgebenden Einrichtung von anderen Einrichtung übermittelt worden ist,
dadurch **gekennzeichnet,**

daß bei der Übermittlung jeder Einzelinformation eine Zusatzinformation übermittelt wird, die angibt, ob die Einzelinformation von der abgebenden Einrichtung erstmals ins Hetz eingespeist wird oder vorher der abgebenden Einrichtung von einer der anderen Einrichtungen übermittelt worden ist.

2. Vorrichtung nach Anspruch 1,
dadurch **gekennzeichnet,**

daß die Zusatzinformation angibt, ob die der abgebenden Einrichtung von einer anderen Einrichtung übermittelte Einzelinformation erstmals von der anderen Einrichtung ins Netz eingespeist worden ist, oder von der anderen Einrichtung weitergeleitet worden ist.

3. Vorrichtung anch Anspruch 2,
dadurch **gekennzeichnet,**

daß der Zusatzinformation zu entnehmen ist, welcher Einrichtung die Einzelinformation der abgebenden Einrichtung übermittelt worden ist.

4. Vorrichtung nach Anspruch 3,
dadurch **gekennzeichnet,**

daß bei mehrkanaligem Informationsempfang, insbesondere ungerichtetem Funkempfang, die Zusatzinformation angibt, über welchen Eingangskanal die übermittelnde Einrichtung die Einzelinformation vorher von einer anderen Einrichtung empfangen hat.